# EUROPEAN PATENT APPLICATION

(11) **EP 0 964 277 A1**
(43) Date of publication of application: **15.12.1999**
(21) Application number: 98110717.0
(22) Date of filing: 10.06.1998
(51) Int. Cl.: G02B 6/38

(54) **Fibre optic male contact system**

(71) Applicant: INTERLEMO HOLDING S.A., CH-7000 Coire (CH)
(72) Inventor: Brooks, Alan, Uckfield, East Sussex (GB)
(74) Representative: Misrachi, Alfred

(57) **Abstract**

The fibre optic male contact system comprises a ferrule 1 with a longitudinal bore 3. Ferrule 1 is press fitted in a ferrule holder 5 in which is also press fitted a hollow fibre retainer 10 aligned with the ferrule and communicating with the bore 3. A fibre optic cable 14 formed of a fibre optic core 15 reinforced by a buffer coating 16 is assembled to the ferrule 1 and fibre retainer 10 by an end portion 17 of the fibre optic core being stripped of the buffer coating and glued in the bore 3 and by a first portion 18 of the fibre optic core 15 and its buffer coating 16 immediately preceding the end portion 17 of the fibre optic core being glued in the hollow fibre retainer 10. A second portion 20 of the fibre optic core 15 and its buffer coating 16 immediately preceding said first portion 18 extends freely out of the fibre retainer 10.

## Description

This invention relates to a fibre optic male contact system for a fibre optic cable formed of a fibre optic core reinforced by a buffer coating, with an end portion of the fibre optic core extending through and adhesively affixed in a longitudinal bore formed in the centre of an elongated ferrule, said end portion of the fibre optic core terminating in a tip coplanar with an end face of the ferrule, and spring means for longitudinally biasing said ferrule for optically coupling the tip of the fibre optic core to an optical device for light transmission therebetween.

Such systems are commonly used for optically coupling optic fibres to each other, or to light sources or detectors for high speed communication and data transmission.

When used in difficult conditions such as exist, for example, in aviation or military operation, vibrations or shocks or other mechanical efforts on the contact system may cause a rupture of the fibre optic core with the resulting loss of signal. And when miniaturisation of the system is required, fragility of the assembly tends to enhance the risk of rupture of the fibre optic core.

It is an object of this invention to avoid these drawbacks by means of a fibre optic male contact system which is versatile and easy to manufacture while providing a satisfactory environment for the fibre optic core.

According to a first aspect of the invention, there is provided a fibre optic male contact system for a fibre optic cable formed of a fibre optic core reinforced by a buffer coating, with an end portion of the fibre optic core extending through and adhesively affixed in a longitudinal bore formed in the centre of an elongated ferrule, said end portion of the fibre optic core terminating in a tip coplanar with an end face of the ferrule, and spring means for longitudinally biasing said ferrule for optically coupling the tip of the fibre optic core to an optical device for light transmission therebetween, wherein a first portion of said buffer coated fibre optic core immediately preceding said end portion of the fibre optic core is adhesively affixed in a longitudinal housing formed throughout an elongated fibre retainer aligned with said ferrule, and a second portion of the buffer coated fibre optic core immediately preceding said first portion of the buffer coated fibre optic core extends freely out of said longitudinal housing of the elongated fibre retainer.

Accordingly, the fibre optic core is positively immobilized and protected in the contact; the mechanical efforts which may affect the assembly or the positioning of the fibre optic core in the contact are shifted outside the contact. The risk of mechanical rupture of the fibre optic core in the contact is minimised. Manipulation or other environmental stresses on the fibre optic cable cannot damage the fibre optic core in the contact. There is no relative motion between the fibre optic core and its buffer coating in the contact. Pulling the cable cannot break the fibre optic core in the contact. And the contact may be strongly miniaturised.

Where a jacketed sheath of strain relief strand material enclosing the buffer coated fibre optic core is placed at a location preceding said second portion of the buffer coated fibre optic core and extends therealong from that location, the jacketed sheath is shifted outside the contact and it is not fixed to the buffer coated fibre optic core. A relatively large distance may be provided between the fibre retainer and the jacketed sheath whereby, in case of contact overtravel, the buffer coated fibre optic core may slide inside the jacketed sheath or bend according to a large radius between the fibre retainer and the jacketed sheath; the risk of breaking the fibre optic core at that level is thus minimized. Miniaturisation of the contact can be enhanced. And compensation of pull forces on the jacketed sheath may be easily achieved.

In a preferred arrangement, there is provided a ferrule holder with two coaxial housings in communication with one another said housings respectively opening on opposite faces of the ferrule holder, wherein said ferrule has one end opposed to said end face force fitted in one of said housings and said fibre retainer has an end force fitted in the other of said housings. Preferably, said ends of the ferrule and fibre retainer are not in contact with one another in the ferrule holder. Still preferably, the buffer coating comes to a positive stop against the ferrule.

According to a further aspect of the invention, said spring means comprise a helical spring surrounding the fibre retainer, said helical spring being comprised between the ferrule holder and a clip holder slidably mounted on the fibre retainer. Positioning of the spring on the outside of the fibre retainer provides a further step towards miniaturisation while retaining an appreciable spring force.

Preferably, a plurality of retaining clips are peripherally arranged on said clip holder. Said clips may be formed by elastic tongues protruding outwardly from a resilient sleeve provided with a longitudinal cut and mounted on the clip holder between a front shoulder and a rear shoulder thereof.

In a preferred arrangement, a polygonal surface is formed on the clip holder. The polygonal surface may be formed on the rear shoulder of the clip holder. Preferably, the clip holder comprises a plurality of inner flat surfaces in sliding engagement with corresponding outer flat surfaces on the fibre retainer. Said outer flat surfaces of the fibre retainer may be formed on a polygonal surface thereof.

According to a further aspect of the invention, there is provided an insert having at least a longitudinal bore housing said ferrule holder, fibre retainer, spring, clip holder and retaining clips. Advantageously, the longitudinal bore has an inner shoulder against which said elastic tongues forming the clips abut. Preferably, the longitudinal bore comprises a polygonal surface formed therein in which the polygonal surface of the clip holder engages slidingly. The longitudinal bore may also house the ferrule.

Still according to a further aspect of the invention, there is provided an alignment device affixed in the longitudinal bore of the insert, said alignment device including a sleeve for front to front alignment of the ferrule with a second ferrule. Advantageously, the alignment device may be threadedly force fitted in the longitudinal bore of the insert.

In all of its aspects, the invention advantageously provides for having both the fibre optic core and the first portion of the buffer coated fibre optic core respectively adhesively affixed in the longitudinal bore of the ferrule and in the longitudinal housing of the elongated fibre retainer by an epoxy resin. And the epoxy resin may be the same for the adhesive fixing of the fibre optic core in the ferrule and of the first portion of the buffer coated fibre optic core in the fibre retainer.

These and other objects, features and advantages of the invention will become readily apparent from the following detailed description with reference to the accompanying drawings which show, diagrammatically and by way of example only, preferred but still illustrative embodiments of the invention.
Figure 1 is a longitudinal view of the contact.
Figure 2 is a longitudinal section of the contact.
Figure 3 is a transverse section according to line III-III of Figure 1.
Figure 4 is a top plan view of a detail of Figure 1.
Figure 5 is an end view according to line V-V of the detail of Figure 4.
Figure 6 is a longitudinal view of an insert assembly showing two contacts according to Figure 1.
Figure 7 is an enlarged part longitudinal section of a detail of Figure 6.
Figure 8 is an enlarged transverse view of another detail of Figure 6.

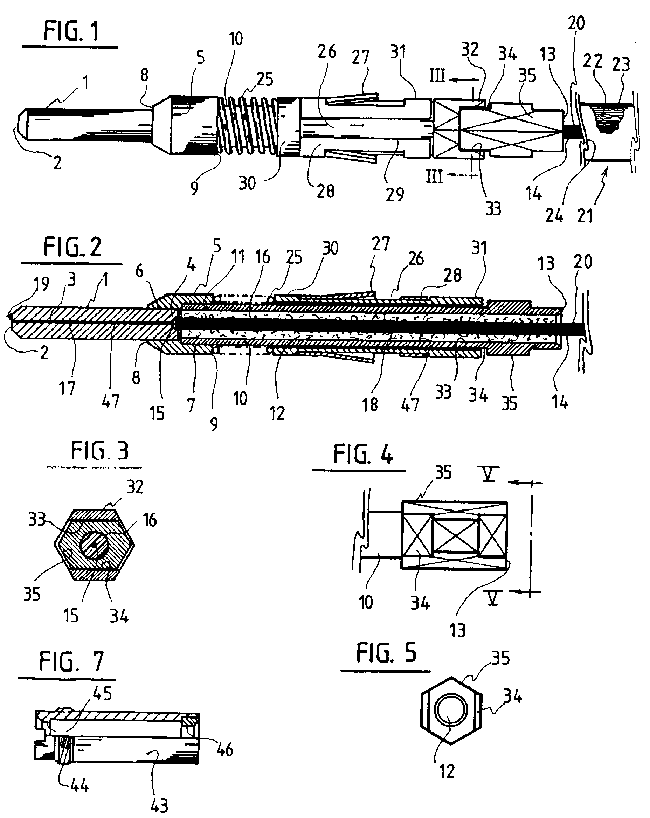

The fibre optic male contact system shown in Figures 1 to 5 comprises an elongated cylindrical ferrule 1 having an end face 2. Inside the ferrule is a longitudinal bore 3 formed in the centre of the ferrule.

The end 4 of the ferrule 1 which is opposed to end face 2 is assembled to a cylindrical ferrule holder 5 having two coaxial cylindrical housings 6 and 7 in communication with one another and respectively opening on opposite faces 8 and 9 of the ferrule holder. Assembly of the ferrule 1 to ferrule holder 5 is obtained by press fitting of the end 4 of the ferrule 1 into the housing 6 of the ferrule holder 5.

An elongated cylindrical fibre retainer 10 is assembled to ferrule holder 5 in alignment with ferrule 1. Assembly of the fibre retainer 10 to ferrule holder 5 is obtained by press fitting of end 11 of fibre retainer 10 into the housing 7 of ferrule holder 5. The fibre retainer 10 has a longitudinal housing 12 extending therethrough from end 11 to end 13 thereof. Longitudinal housing 12 is aligned with the longitudinal bore 3 of ferrule 1 and end 4 of ferrule 1 and end 11 of fibre retainer 10 are not in contact to one another in the ferrule holder 5 there being a gap between them.

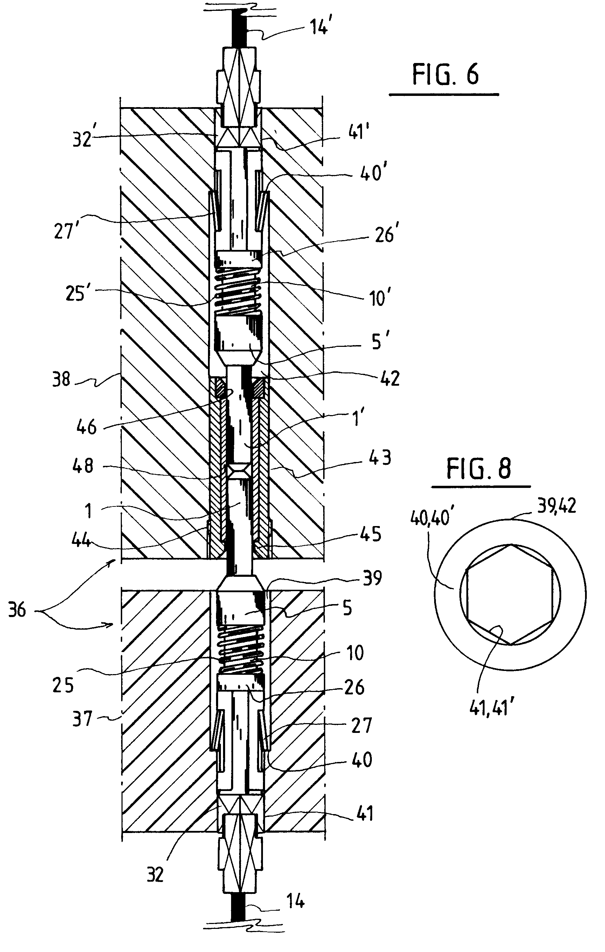

A fibre optic cable 14 formed of a fibre optic core 15 reinforced by a buffer coating 16 is assembled to the ferrule 1 and to the fibre retainer 10. Such an assembly is obtained by an end portion 17 of the fibre optic core stripped of the buffer coating 16 extending through the longitudinal bore 3 of ferrule 1 where it is adhesively affixed, for example by an epoxy resin 47, whereas a first portion 18 of the fibre optic core 15 and its buffer coating 16 immediately preceding the end portion 17 of fibre optic core 15 is adhesively affixed in the longitudinal housing 12 of fibre retainer 10. Adhesive fixing of the buffer coated fibre optic core in housing 12 of fibre retainer 10 is preferably obtained by an epoxy resin, which may be the same as the epoxy resin 47 used for adhesive fixing of the end portion 17 of fibre optic core in the ferrule 1. Preferably, the buffer coating 16 comes to a positive stop against the end 4 of ferrule 1. The end portion 17 of fibre optic core 15 terminates in a tip 19 coplanar with end face 2 of ferrule 1 for optically coupling the optic fibre core 15 to a light source or detector (not shown) or to another fibre optic core (as shown in Figure 6).

A second portion 20 of the fibre optic core 15 and its buffer coating 16 immediately preceding the first portion 18 of fibre optic core 15 and buffer coating 16 extends freely out of the longitudinal housing 12 of fibre retainer 10.

A sheath 21 (shown in Figure 1) of strain relief strand material 22 such as for example Kevlar (Trade Mark) surrounded by a plastic jacket 23, encloses the buffer 16 coated fibre optic core 15. This sheath is placed at a location 24 preceding the second portion 20 of the buffer 16 coated fibre optic core 15 and extends therealong as from location 24.

A helical spring 25 is mounted on fibre retainer 10, between ferrule holder 5 and a cylindrical clip holder 26 slidably mounted on fibre retainer 10, for longitudinally biasing the ferrule holder 5 and consequently the ferrule 1 to optically couple the tip 19 of fibre optic core 15 to an optical device for light transmission therebetween.

A plurality of retaining clips 27 are peripherally arranged on the clip holder 26. The clips 27 are formed by elastic tongues cut and outwardly protruding from a resilient sleeve 28 provided with a longitudinal cut 29 for resilient mounting on clip holder 26 between a front shoulder 30 and a rear shoulder 31 of the clip holder 26.

Clip holder 26 has a polygonal surface 32 formed thereon, preferably a rear shoulder 31.

A pair of flat surfaces 33 are formed inside the clip holder 26, at the level of its rear shoulder 31. These flat surfaces are for sliding engagement of corresponding outer flat surfaces 34 formed on the fibre retainer 10 in order to prevent rotation of the fibre retainer with respect to the clip holder 26. Preferably, the outer flat surfaces 34 are formed on a handling polygonal surface 35 of fibre retainer 10 (Figure 4).

An insert assembly 36 (Figure 6) for installation in a fibre optic light transmission appliance (not shown) comprises two inserts 37 and 38, preferably of plastic material.

Insert assembly 36 is for positioning a ferrule 1, in front to front alignment with a second ferrule 1'.

Insert 37 comprises a longitudinal bore 39 for housing a ferrule holder 5, fibre retainer 10, spring 25, clip holder 26 and retaining clips 27. Longitudinal bore 39 has an inner shoulder 40 formed therein for abutment of retaining clips 27. Longitudinal bore 39 further comprises an inner polygonal surface 41 also formed therein (Figure 8) for sliding engagement of the polygonal surface 32 of clip holder 26. Ferrule 1 extends out of longitudinal bore 39.

Insert 38, comprises a longitudinal bore 42 coaxial to longitudinal bore 39 of insert 36. Longitudinal bore 42 is for housing a ferrule 1', ferrule holder 5', fibre retainer 10', spring 25', clip holder 26', and retaining clips 27'. As longitudinal bore 39, bore 42 has an inner shoulder 40' formed therein for abutment of retaining clips 27', and inner polygonal surface 41' for the sliding fit of the polygonal surface 32' of clip holder 26'. In this case, ferrule 1' is located within insert 38.

An alignment device 43 (Figures 6 and 7) is affixed in longitudinal bore 42. Preferably, this alignment device 43 comprises a peripheral thread 44 which is threadedly force fitted in bore 42. A sleeve 48, preferably a ceramic sleeve, is installed in alignment device 43 for front to front alignment of ferrule 1 and ferrule 1' both engaged into the sleeve as shown in Figure 6. A retainer 46 cooperates with a shoulder 45 in the alignment device to hold the sleeve 48 therein.

The ferrules 1, 1' and fibre retainers 10, 10' are for the respective adhesive holding of a fibre optic cable 14, 14' as described hereinbefore.

Within this environment, the combination of the polygonal surfaces of longitudinal bores 39 and 42 with the polygonal surfaces 32 and 32' of the clip holders 26, 26' allows angular positioning and immobilization of the clip holders and back and forth movement thereof in the inserts 37 and 38 up to locking of the clips 27, 27' against inner shoulders 40, 40'. Simultaneously, the combination of the flat surfaces 33 and 34 of the clip holders 26, 26' and fibre retainers 10, 10' prevent rotation of the fibre retainers in the clip holders. Accordingly, it is possible to angularly position the ferrules 1, 1', and consequently the fibre optic cores 5 and their tips 19, with respect to one another for the purpose of eccentricity reduction in angled physical contact.

Variants are available without departing from the scope of the invention.

For example, insert 37 and its fibre optic arrangement may be used without insert 38 for installation in a fibre optic light transmission appliance. In that case, longitudinal bore 39 may require a corresponding diameter reduction at the location of ferrule holder 5 for proper positioning thereof, or this diameter reduction may be provided by a positioning arrangement integral with an optical device with which there is light transmission.

And of course, as a result of the extreme miniaturisation afforded by the system, either the insert assembly 36 or the insert 37 may be designed to house a plurality of ferrules and their fibre retainer arrangements in concentric condition.

## Claims

1. A fibre optic male contact system for a fibre optic cable (14) formed of a fibre optic core (15) reinforced by a buffer coating (16), with an end portion (17) of the fibre optic core (15) extending through and adhesively affixed in a longitudinal bore (3) formed in the centre of an elongated ferrule (1), said end portion (17) of the fibre optic core (15) terminating in a tip (19) coplanar with an end face (2) of the ferrule (1), and spring means (25) for longitudinally biasing said ferrule (1) for optically coupling the tip (19) of the fibre optic core (15) to an optical device for light transmission therebetween, wherein a first portion (18) of said buffer (16) coated fibre optic core (15) immediately preceding said end portion (17) of the fibre optic core (15) is adhesively affixed in a longitudinal housing (12) formed throughout an elongated fibre retainer (10) aligned with said ferrule (1), and a second portion (20) of the buffer (16) coated fibre optic core (15) immediately preceding said first portion (18) of the buffer coated fibre optic core extends freely out of said longitudinal housing (12) of the elongated fibre retainer (10).

2. A system according to claim 1, further comprising a jacketed sheath (21, 23) of strain relief strand material (22) enclosing said buffer (16) coated fibre optic core (15) wherein said jacketed sheath is placed at a location (24) preceding said second portion (20) of the buffer (16) coated fibre optic core (15) and extends therealong from that location.

3. A system according to claim 1 or claim 2, further comprising a ferrule holder (5) having two coaxial housings (6, 7) in communication with one another, said housings respectively opening on opposite faces (8, 9) of said ferrule holder (5), wherein said ferrule has an end (4) opposed to said end face (2) force fitted into one (6) of said housings and said fibre retainer (10) has an end (11) force fitted in the other (7) of said housings.

4. A system according to claim 3, wherein said ends (4, 11) of the ferrule (1) and fibre retainer (10) are not in contact with one another in the ferrule holder (5).

5. A system according to claim 4, wherein said buffer coating (16) comes to a positive stop against the ferrule (1).

6. A system according to claim 3, wherein said spring means comprise a helical spring (25) surrounding said fibre retainer (10), said helical spring (25) being comprised between said ferrule holder (5) and a clip holder (26) slidably mounted on the fibre retainer (10).

7. A system according to claim 6, further comprising a plurality of retaining clips (27) peripherally arranged on said clip holder (26).

8. A system according to claim 7, wherein said clips (27) are formed by elastic tongues protruding outwardly from a resilient sleeve (28) provided with a longitudinal cut (29) and mounted on the clip holder (26) between a front shoulder (30) and a rear shoulder (31) thereof.

9. A system according to claim 8, further comprising a polygonal surface (32) formed on said clip holder (26).

10. A system according to claim 9, wherein said polygonal surface (32) is formed on the rear shoulder (31) of the clip holder (26).

11. A system according to claim 10, wherein said clip holder (26) comprises a plurality of inner flat surfaces (33) in sliding engagement with corresponding outer flat surfaces (34) formed on the fibre retainer (10).

12. A system according to claim 10, wherein said outer flat surfaces (34) of the fibre retainer (10) are formed on a polygonal surface (35) thereof.

13. A system according to claim 11, further comprising an insert (37, 38) having at least a longitudinal bore (39, 42) housing said ferrule holder (5, 5'), fibre retainer (10,10'), spring (25, 25'), clip holder (26, 26'), and retaining clips (27, 27').

14. A system according to claim 13, wherein said longitudinal bore (39, 42) has an inner shoulder (40, 40') against which said elastic tongues (27, 27') abut.

15. A system according to claim 14, wherein said longitudinal bore (39, 42) comprises a polygonal surface (41, 41') formed therein in which the polygonal surface (32, 32') of the clip holder (26, 26') engages slidingly.

16. A system according to claim 15, wherein said longitudinal bore (42) also houses the ferrule (1').

17. A system according to claim 16, further comprising an alignment device (43) affixed in said longitudinal bore (42), said alignment device (43) including a sleeve (48) for front to front alignment of the ferrule (1') with a second ferrule (1).

18. A system according to claim 17, wherein said alignment device (43) is threadedly (44) force fitted in said longitudinal bore (42).

19. A system according to any one of claims 1 to 18, wherein both the fibre optic core (15) and the first portion (18) of the buffer (16) coated fibre optic core (15) are respectively adhesively affixed in the longitudinal bore (3) of the ferrule (1) and in the longitudinal housing (12) of the elongated fibre retainer (10) by an epoxy resin (47).

20. A system according to claim 19, wherein both the fibre optic core (15) and the first portion (18) of the buffer (16) coated fibre optic core (15) are respectively adhesively affixed in the ferrule (1) and in the fibre retainer (10) by the same epoxy resin (47).
